# EUROPEAN PATENT APPLICATION

(11) **EP 4 574 394 A1**
(43) Date of publication of application: **25.06.2025**
(21) Application number: 23383356.5
(22) Date of filing: 22.12.2023
(51) Int. Cl.: B29C 49/06, B29C 49/12, B29C 49/42, B29C 49/02, B29L 31/00

(54) **INJECTION STRETCH BLOW MOLDING MOLD AND METHOD**

(71) Applicant: ALPLA Werke Alwin Lehner GmbH & Co. KG, 6971 Hard (AT)
(72) Inventor: ATANCE ORDEN, Angel, Montcada i Reixac (ES); CARRILLO GUERRERO, David, Cerdanyola del Valles (ES)
(74) Representative: González López-Menchero, Álvaro Luis

(57) **Abstract**

An injection stretch blow molding mold and method, the mold comprising at least one molding unit with one injection stack (10) constituted by an injection cavity (11), an injection neck ring (12) and an injection core (13) separable to an open position; a transfer device for transferring the preform (1) to a stretch-blow stack (20); one stretch-blow stack (20) constituted by a stretch-blow cavity (21), a stretch-blow neck ring (22) and a stretch-blow core (23) separable to an open position; wherein the injection neck ring (12) is part of the transfer device, and the stretch-blow core (23) is part of the transfer device and is movable from the open position to a first transfer position in which the stretch-blow core (23) is aligned in the first axial direction (1A) with the injection neck ring (12).

## Description

### TECHNICAL FIELD

The present invention is related to an injection stretch blow molding mold and to an injection stretch blow molding method implemented using said injection stretch blow molding mold.

The injection stretch blow molding is a well known method for producing plastic containers. This known method comprises first producing a preform by injecting molten material in an injection stack, transferring such preform into a stretch-blow stack while still in hot plastic state, and stretching the preform into the stretch-blow mold with an extensible rod while blowing pressurized air into the preform, expanding such preform completely filling the inner volume of the stretch-blow stack, obtaining the final shape of the container.

### BACKGROUND OF THE INVENTION

Machines and methods for forming preforms in an injection stack, transferring the preform into a stretch-blow stack, and stretching and blowing the preform in the stretch-blow stack forming a container are known.

In those known machines and methods, the injection stack is formed by an injection cavity, an injection neck ring and an injection core coupled in a closed position. Once a preform has been produced in said injection stack, the injection cavity, the injection neck ring and the injection core are separated in a first axial direction, producing the extraction of the preform from the injection stack.

The neck of the preform includes a retaining configuration, typically a protruding flange or thread projecting around it, which is formed by a recess of the injection neck ring. After the formation of the preform, said retaining configuration remains inserted in the injection neck ring molding element during separation of the injection stack, so that the preform remains held by the injection neck ring.

Then the injection neck ring, holding the preform, moves in a plane perpendicular to the first axial direction, typically rotating, from an injection station to a stretch-blow station, aligning the injection neck ring and the preform held by it with a stretch-blow cavity and a stretch-blow core in a second axial direction parallel to the first axial direction, while an additional injection neck ring gets aligned with the injection core and the injection cavity in the first axial direction.

Then the stretch-blow core, the injection neck ring holding the preform, and the stretch-blow cavity are coupled by a movement in the second axial direction, forming a stretch-blow stack with the preform housed therein, which is then stretched by an extensible rod of the stretch-blow core and blown by pressurized air introduced therein forming a container.

Later, the stretch-blow stack is open by separating its parts in the second axial direction, while the container remains held by the injection neck ring through the retention configurations. Then the injection neck ring moves to an ejection station where the injection neck ring opens releasing the container. Finally, the injection neck ring rotates again to the injection station where the cycle repeats; in document US4648824A a machine of this type is described.

In some cases the machine includes an additional heat conditioning station between the injection stage and the stretch-blow stage; in document US4105391A a machine of this type is described.

Document US4895509 describes a similar solution but with linear transferring movement instead of rotary movement, with similar problem as the previously mentioned system.

This production method requires a special machine, and special mold adapted for the production of stretch-blow containers, in most cases the machine uses a vertical clamping system, and cannot be implemented in already existing injection molding machines, which are the most numerous in the plastic processing industry.

Also, in the machines implementing such known method, the injection station includes an in-line array of injection stacks and the stretch-blow station includes an in-line array of stretch-blow stacks, so that the transfer of the preforms from the injection station to the stretch-blow station requires a long movement which increases the cycle time reducing the productivity.

In all these cases, the mold needs several sets of neck rings, usually three or four sets depending on the system, which are complex and expensive mold components.

Examples of injection-stretch-blow molds to be installed in a standard injection molding machine can be found published, for example document GB2415936 describes an injection-stretch-blow mold to install in an horizontal injection molding machine, the injection molding stack axis and the stretch-blow molding stack axis being generally positioned perpendicular to each other; the system is very interesting for producing large containers, it has the drawback that the transfer of the preform from the injection stack to the stretch-blow mold requires a 90° turn, and in addition the movement of the stretch-blow core to the preform has a long path, consuming a lot of time in the transfer; it has a limitation in the number of cavities, not being useful in practice for the production of small containers and high cavitation and productivity.

The present invention solves the above and other problems of the stretch-blow molding methods and machines already known in the state of the art.

### DESCRIPTION OF THE INVENTION

According to a first aspect of the present invention, it concerns to a stretch-blow molding mold, as defined in claim 1.

The proposed injection stretch blow molding mold comprises at least one molding unit. Each molding unit comprises:
one injection stack constituted by an injection cavity, an injection neck ring and an injection core coupled in a closed position and separable to an open position in a first axial direction, the injection cavity being connected to a molten material supply for producing a preform;
a transfer device adapted for transferring the preform from the injection stack to the stretch-blow stack, inserting the preform in the stretch-blow stack;
one stretch-blow stack constituted by a stretch-blow cavity, a stretch-blow neck ring and a stretch-blow core coupled in a closed position and separable to an open position in a second axial direction parallel to the first axial direction, the stretch-blow core being connected to a pressurized gas supply, for blowing the preform hold in the stretch-blow stack into a container, and including a stretch rod movable from a retracted position to an extended position into the stretch-blow stack for stretching the preform into the container;

According to the above, the injection stack is a hollow enclosure where the molten material can be injected to produce a preform. The injection stack is formed by the injection cavity, the injection core and the injection neck ring interposed between the injection cavity and the injection core, when coupled to each other in a closed position.

The injection cavity has a concave cavity defining an outer surface of a body region of the preform to be produced, the injection neck ring defines the outer surface of a neck region of the preform to be produced, and the injection core has a protruding convexity which, when in the closed position, is inserted in the injection neck ring projecting into the concave cavity of the injection cavity, said protruding convexity defining an inner surface of a hollow interior of the preform to be produced.

The injection cavity, the injection core and the injection neck ring are aligned in the first axial direction, typically concentric with the injection neck ring, and are actively separable to each other in said first axial direction through an actuator, extracting the injection core from the injection cavity and from the injection neck ring, and separating the injection neck ring from the injection cavity a distance sufficient to completely extract the formed preform from the interior of the injection cavity.

Typically, the injection neck ring includes molding features adapted to define retention configuration in the outer surface of the neck region of the preform. Said retention configurations are typically a protruding flange and/or a thread around the outer surface of the neck region of the preform. After the formation of the preform, said retention configuration remain inserted in the molding feature of the injection neck ring during the separation of the injection stack, so that the preform remains hold by the injection neck ring.

According to an embodiment, each of the injection neck ring and the stretch-blow neck ring is split into several parts, typically two halves, coupled in a closed neck ring position and separable to an open neck ring position.

According to this, the injection neck ring is preferably formed by two halves coupled together in a closed neck ring position. Those two halves are actively separable, through an actuator, in a transverse direction perpendicular to the first axial direction, permitting the extraction of the retention configuration from the molding features of the injection neck ring and the release of the preform from the injection neck ring.

Typically, at least some and preferably all the injection cavity, the injection core and the injection neck ring are actively cooled through a cooling circuit passing therethrough. Also, at least some and preferably all the stretch-blow cavity, the stretch-blow core and the stretch-blow neck ring are also actively cooled through a cooling circuit passing therethrough.

The molten material supply is connected to the injection cavity through an injection nozzle and is configured to melt a plastic material into a fluid form and to inject said plastic material into the injection stack through said nozzle producing the preform with the shape of the injection enclosure.

Similarly, the stretch-blow stack is a hollow enclosure adapted to contain the preform formed in the injection stack and to stretch said preform through a stretch rod and to blow the preform by injecting pressurized gas into the preform blowing the preform until it completely fills the hollow enclosure of the stretch-blow stack, becoming a container.

The stretch-blow stack is formed by the stretch-blow cavity, the stretch-blow core and the stretch-blow neck ring interposed between the stretch-blow cavity and the stretch-blow core, when coupled to each other in a closed position.

The stretch-blow cavity has a concave cavity defining an outer surface of a body region of the container to be produced, the stretch-blow neck ring defines the outer surface of a neck region and the shoulder of the stretch-blow article, and the stretch-blow core has a protruding convexity which, when in the closed position, is inserted in the stretch-blow neck ring and optionally projecting into the concave cavity of the stretch-blow cavity.

The stretch-blow core includes the extensible rod which can be extended in the second axial direction when the stretch-blow stack is in the closed position, stretching the preform towards the bottom of the stretch-blow cavity, and also includes one or more pressurized gas nozzles, connected to the pressurized gas supply, to blow pressurized gas into the preform.

The stretch-blow cavity, the stretch-blow core and the stretch-blow neck ring are aligned in the second axial direction, typically concentric with the stretch-blow neck ring, and are separable to each other in said second axial direction, extracting the stretch-blow core from the stretch-blow cavity and from the stretch-blow neck ring and separating the stretch-blow neck ring from the stretch-blow cavity a distance sufficient to completely extract the formed container from the interior of the stretch-blow cavity
Typically, the stretch-blow neck ring includes the same molding features than the injection neck ring adapted to hold the container by the retention configuration defined in the outer surface of the neck region of the preform.

The stretch-blow neck ring can be formed by several parts, typically two halves, coupled together in a closed neck ring position. Those parts are actively separable, through an actuator, in a transverse direction perpendicular to the second axial direction, permitting the extraction of the retention configuration from the molding features of the stretch-blow neck ring and the release of the container from the stretch-blow neck ring.

Typically, at least some and preferably all the stretch-blow cavity, the stretch-blow core and the stretch-blow neck ring are actively cooled through a cooling circuit passing therethrough.

The stretch-blow molding mold further includes a transfer device adapted to transfer the preform from the injection stack to the stretch-blow stack, inserting the preform in the stretch-blow stack.

The present invention also proposes, in a manner not known in the state of the art, the following:
the injection neck ring is part of the transfer device, and the stretch-blow core is also part of the transfer device and is movable from the open position to a first transfer position in which the stretch-blow core is aligned in the first axial direction with the injection neck ring.

According to the above, the transfer device includes the stretch-blow core, which is actively movable, by an actuator, through a linear movement, from the open position, aligned with the stretch-blow cavity and the stretch-blow neck ring in the second axial direction and extracted therefrom, to a first transfer position aligned with at least the injection neck ring in the first axial direction, and preferably also aligned with the injection cavity in said first axial direction, the stretch-blow core facing the preform hold by the injection neck ring.

This alignment of the injection neck ring and the stretch-blow core allows the mating of the stretch-blow core with the injection neck ring by a relative movement, preferably a backwards movement of the injection neck ring in the first axial direction, coupling the preform hold by the injection neck ring to the stretch-blow core.

Then, the release of the preform by opening of the injection neck ring allows the transfer of the preform held by the stretch-blow core to the stretch-blow neck ring by moving said stretch-blow core to a position aligned with the stretch-blow neck ring in the second axial direction, through a linear movement.

The stretch-blow neck ring can be then closed, coupling to the preform held by the stretch-blow core, typically inserting the retention configurations of the preform into the molding features of the stretch-blow neck ring as a register.

The injection neck ring can be movable between an open and a closed neck ring positions, and the stretch-blow neck ring can be also moved between an open and a closed neck ring position.

In this case, the release of the preform from the injection neck ring can be produced by moving said injection neck ring into the open neck ring position, and the coupling of the stretch-blow neck ring to the preform hold by the stretch-blow core can be achieved by closing the stretch-blow neck ring around the neck region of the preform, moving the stretch-blow neck ring from the open neck ring position into the closed neck ring position.

This proposed injection-stretch-blow molding mold can be coupled to a regular injection molding machine, not adapted to implement conventional stretch-blow molding methods, adapting such injection machine to the production of containers using a stretch-blow molding method. This increases the flexibility of the existing and future injection molding machines and reduces the operational costs, amortization costs, increasing commonality in the production lines, reducing maintenance costs, resulting in a reduction in the cost of the containers.

The injection-stretch-blow mold described above can be adapted to be installed in a regular injection molding machine, which is the type most numerous and affordable in the plastics processing sector, this is an important advantage.

Another important advantage of the proposed injection-stretch-blow molding mold is the large number of molding units it can contain, and therefore the high productivity of the equipment; The distribution of the molding units can be carried out in rows either with their elements arranged adjacently or alternately, arranged in parallel or symmetrically, to optimize the work surface of the injection molding machine platens; in this way it is possible to make distributions of 32, 48 or 72 molding units, specially for small bottles or containers.

According to a second aspect of the present invention, it concerns to a stretch-blow molding method, as defined in claim 8.

The proposed method is an injection stretch blow molding method for an injection stretch blow molding mold comprising at least one molding unit. The method comprises for each molding unit, in a manner already known in the state of the art:
forming a preform by injecting molten material into one injection stack constituted by an injection cavity, an injection neck ring and an injection core coupled in a closed position;
extracting the preform from the injection stack by separating the injection cavity, the injection neck ring and the injection core in a first axial direction to an open position, while keeping the preform holding by the injection neck ring;
transferring the preform from the injection stack to a stretch-blow stack, inserting the preform in the stretch-blow stack in a manner not known in the state of the art;
forming a container by stretch-blowing the preform held in the stretch-blow stack by moving a stretch rod from a retracted position to an extended position into the stretch-blow stack and by blowing pressurized gas into the preform, the forming of the container being simultaneous with the forming of an additional preform in the injection stack; and
extracting the container from the stretch-blow stack by separating a stretch-blow cavity, a stretch-blow neck ring and a stretch-blow core, constitutive of the stretch-blow stack when coupled in a closed position, in a second axial direction parallel to the first axial direction from the closed position to an open position while keeping the container held by the stretch-blow neck ring, simultaneously with the extraction of the recenty formed preform from the injection stack, and releasing the container.

The simultaneous extraction of the preform and of the container allows a simultaneous separation of the elements constitutive of the injection stack and of the stretch-blow stack, simplifying the construction and operation of the system and reducing the production time.

The transferring of the preform comprises, in a manner not known in the state of the art, moving the stretch-blow core, through a linear movement, to a first transfer position aligned with the first axial direction, attaching the preform to the stretch-blow core while maintaining the container simultaneously formed held by the stretch-blow neck ring, releasing the preform from the injection neck ring, releasing the simultaneously formed container from the stretch-blow neck ring, moving the stretch-blow core to a second transfer position aligned with the second axial direction and closing the stretch-blow stack housing the preform therein.

In the cases where the mold is composed of multiple rows, each row laying out the molding units alternately or adjacently, the insertion of the preform in a stretch-blow core by a common neck ring support may involve the simultaneous insertion of a blown container into an injection core, which can damage the blown container by being too tight against the injection core due to the shrinkage of the plastic material with which the blown container is made. In these cases, the injection stacks can be placed slightly axially backward with respect to the level of the stretch-blow stacks; this allows for smooth insertion of the blown container mouth in the injection core while facilitating the subsequent release of the blown container from the injection core.

The release of the container can be produced by moving the stretch-blow neck ring into the open neck ring position, and the closing of the stretch-blow stack can require moving the stretch-blow neck ring into the closed neck ring position around the neck region of the preform hold by the stretch-blow core, and mating the stretch-blow core, neck ring and cavity.

Preferably, the preform will be produced including retention configurations on the outer surface of its neck region, will be held by the injection neck ring through said retention configurations, and the stretch-blow neck ring will be closed around the neck region of the preform coupling said retention configurations with complementary molding features included in the stretch-blow neck ring as a register to prevent deformation of the retention configurations.

### BRIEF DESCRIPTION OF THE FIGURES

The foregoing and other advantages and features will be more fully understood from the following detailed description of an embodiment with reference to the accompanying drawings, to be taken in an illustrative and non-limitative manner, in which:

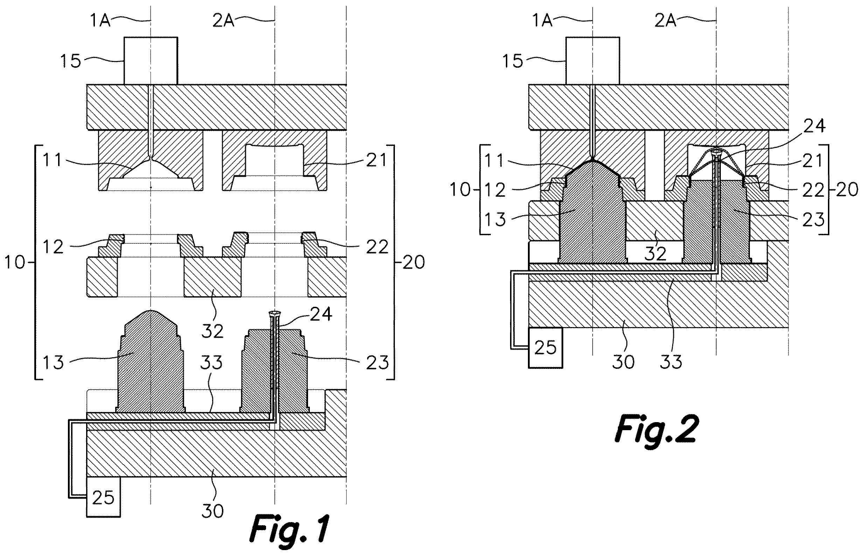

Fig. 1 shows a schematic cross section of one molding unit, in the open position.
Fig. 2 shows the molding unit of Fig. 1, in an initial step of the method, the injection stack and the stretch-blow stack being in the closed position, with a preform formed in the injection stack by injection and with a container formed in the stretch-blow stack by stretching and blowing a preform injected in a preceding cycle of the method.
Fig. 3 shows the molding unit of Fig. 2 in the following step of the method, the injection stack and the stretch-blow stack being in the open position, with the preform hold by the injection neck ring 12 and with a container hold by the stretch-blow neck ring.
Fig. 4 shows the molding unit of Fig. 3 in the following step of the method, the injection stack and the stretch-blow stack being in the open position and the transfer support being displaced to the first transfer position, positioning the stretch-blow core aligned with the injection neck ring in the first axial direction.
Fig. 5 shows the molding unit of Fig. 4 in the following step of the method, the stretch-blow core being coupled to the injection neck ring, and the injection neck ring being in the open neck ring position, the preform being hold on the stretch-blow core, free from the injection neck ring.
Fig. 6 shows the molding unit of Fig. 5 in the following step of the method, in which , the stretch-blow neck ring forwards and in the open neck ring position to release the container hold thereon for extraction from the molding unit, the transfer support returns to the original position, the stretch-blow core with the preform hold thereon being aligned with the stretch-blow neck ring in the second axial direction Once the container has been removed, the method returns to the position shown in Fig. 2, restarting the cycle described in Figs. 2 to 6.

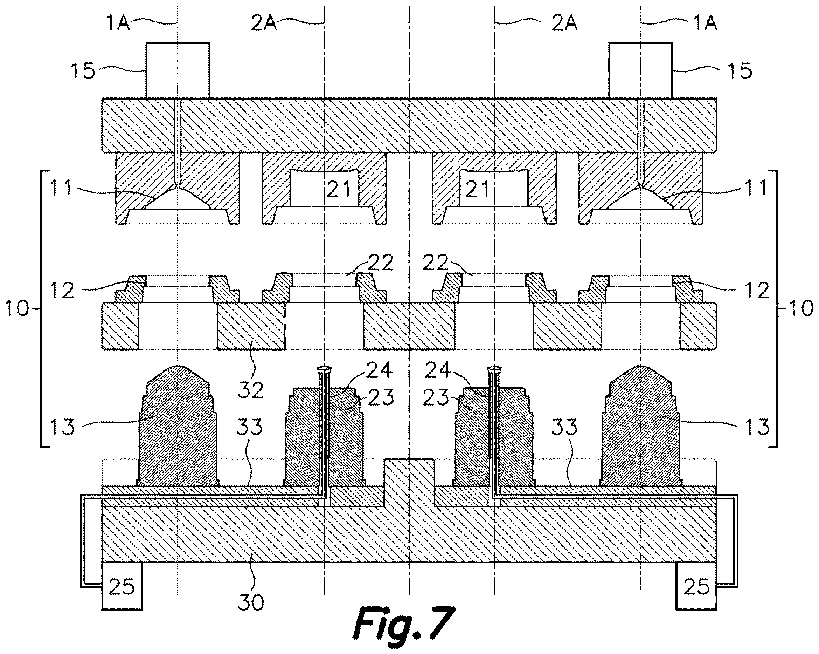

Fig. 7 shows schematic cross section of an injection stretch blow molding mold comprising at least two symmetric molding units, or two rows of symmetric molding units.

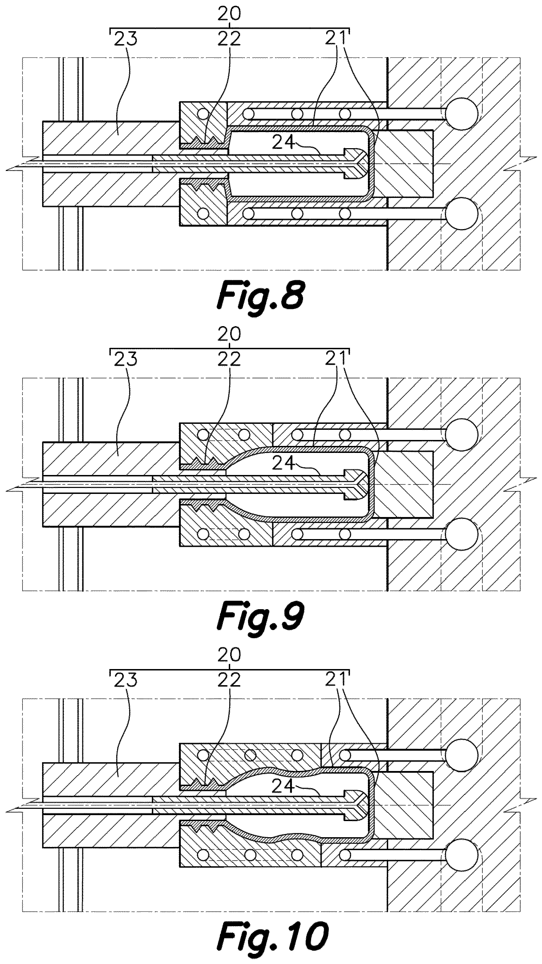

Fig. 8 shows an alternative embodiment of the stretch-blow stack to produce a straight wall container, where the stretch-blow cavity forms most of the wall of the container, while the stretch-blow neck ring only forms the neck and shoulder of the container.
Fig. 9 shows another alternative embodiment of the stretch-blow stack to produce a shaped container in which the stretch-blow cavity forms the lower part of the container while the stretch-blow neck ring forms the higher part of the container,
Fig. 10 shows another additional alternative embodiment of the stretch-blow stack to produce a contoured container in which the stretch-blow cavity forms only the bottom part of the container while the stretch-blow neck ring forms the most of the contoured wall of the container,

### DETAILED DESCRIPTION OF THE INVENTION AND OF PARTICULAR EMBODIMENTS

According to the first aspect, the present invention is related with an injection stretch blow molding mold comprising at least one molding unit.

Each molding unit comprises one injection stack 10 constituted by an injection cavity 11, an injection neck ring 12 and an injection core 13 coupled in a closed position and separable to an open position in a first axial direction 1A, the injection cavity 11 being connected to a molten material supply 15 for producing a preform 1.

The molding unit also comprises one stretch-blow stack 20 constituted by a stretch-blow cavity 21, a stretch-blow neck ring 22 and a stretch-blow core 23 coupled in a closed position and separable to an open position in a second axial direction 2A parallel to the first axial direction 1A, the stretch-blow core 23 being connected to a pressurized gas supply 25, for blowing the preform 1 hold in the stretch-blow stack 20 into a container 2, and including a stretch rod 24 movable from a retracted position to an extended position into the stretch-blow stack 20 for stretching the preform 1 into the container 2.

Preferably the first and second axial directions 1A and 1B are horizontal directions, allowing the closing of the injection stack 10 and of the stretch-blow stack 20 in a horizontal direction.

According to the embodiment shown in the figures, the stretch-blow core 23 is connected to the pressurized gas supply 25 though a channel defined in the transfer support 33 which is later described in detail. Also, the stretch rod 24 can be moved from the retracted position to the extended position, actuated mechanically, or by an electric motor or by compressed gas among other alternative means of actuation.

Preferably, the stretch-blow core 23 with the stretch rod 24 in retracted position has the same length as the injection core 13, so that when the preform 1 is coupled to the stretch-blow core 23 the stretch rod 24 is in contact or almost in contact with the bottom of the preform, providing additional stability to the preform during the lateral movement of the stretch-blow core 23, allowing faster transfer movement thereof.

Each injection neck ring 12 is preferably split into two parts coupled in a closed neck ring position and separable to an open neck ring position, and each stretch-blow neck ring 22 is also preferably split into two parts coupled in a closed neck ring position and separable to an open neck ring position.

The molding unit further comprises a transfer device adapted for transferring the preform 1 from the injection stack 10 to the stretch-blow stack 20, inserting the preform 1 in the stretch-blow stack 20.

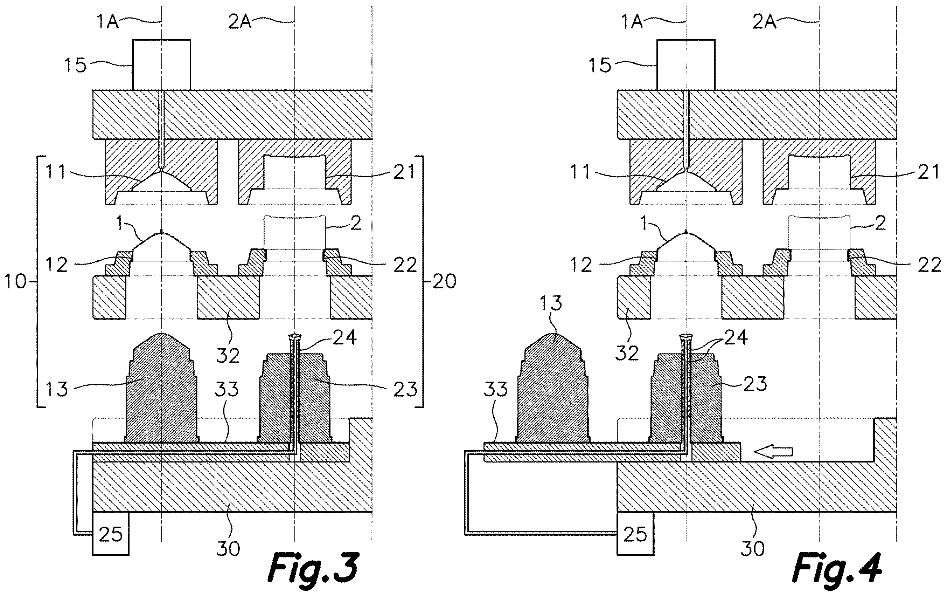

The stretch-blow core 23 is part of the transfer device and is movable from the open position to a first transfer position in which the stretch-blow core 23 is aligned in the first axial direction 1A with the injection neck ring 12, as shown in Fig. 4.

The injection neck ring 12 is also part of the transfer device by being able to retract and thus inserting the preform into the stretch-blow core, and is movable between the closed and open neck ring position to release the preform held in the stretch-blow core.

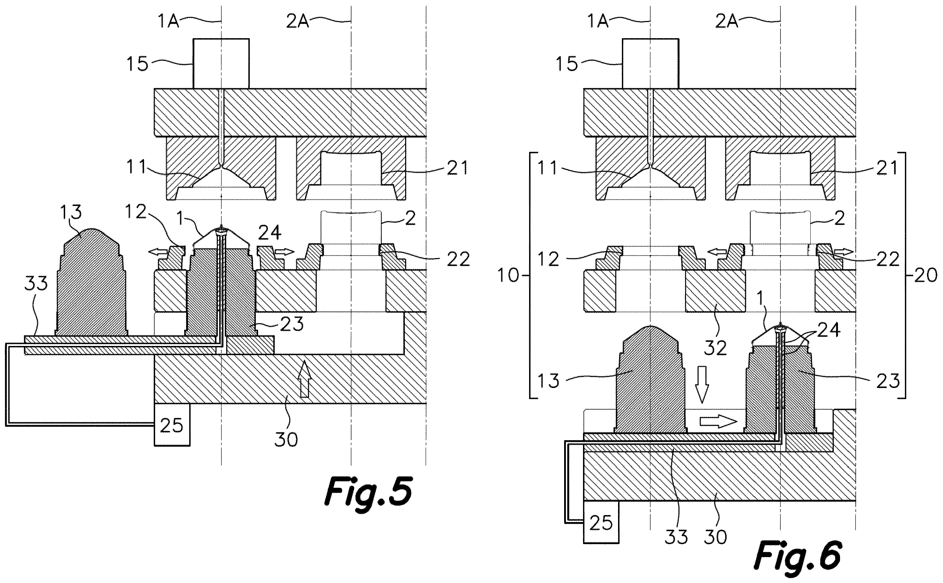

The release of the container can be produced, in the preferred embodiment, just after the introduction of a new preform in the stretch-blow stack, as shown in Fig. 6, or before the introduction of the preform in the stretch-blow stack.

According to one embodiment of the present invention, the injection core 13 and the stretch-blow core 23 are both supported in a single core support 30 movable in a direction parallel to the first and second axial directions 1A, 2A.

This core support 30 will be automatically movable by an actuator, typically the clamping actuator of the injection molding machine, pushing the injection and stretch-blow cores 13, 23 against the injection and stretch-blow cavities 11, 21, compressing the interposed injection and stretch-blow neck rings 12, 22, sealing the enclosures of the injection and stretch-blow stacks 10. 20. The movement of the core support 30 can preferably provide the mold clamping force required to inject the molten material in the injection stack 10 without leaking. The injection and stretch-blow cavities 11, 21 can be stationary, to receive said clamping force.

According to another embodiment of the invention, the injection core 13 and the stretch-blow core 23 can be both supported in a single transfer support 33, or in a single transfer support 33 supported on the core support 30, the transfer support 33 being movable in a plane perpendicular to the first and second axis directions 1A, 2A, or being slidably movable in a transversal direction perpendicular to both first and second axial directions 1A, 2A.

The injection neck ring 12 and the stretch-blow neck ring 22 can be both supported in a single neck ring support 32 movable in a direction parallel to the first and second axial directions 1A, 2A with independence to the movement of other parts of the injection stack 10 and of the stretch-blow stack 20, such the movement of the injection and stretch-blow cores in the first and second axial directions 1A, 2A.

According to one embodiment of the present invention, the movement of the injection neck ring 12 and the stretch-blow neck ring 22 in a direction parallel to the first and second axial directions 1A, 2A can be actuated by the ejector actuator of the injection molding machine, which is itself independent of the clamping movement of the same injection molding machine.

This movement of the injection and stretch-blow neck rings 12, 22 with independence of the movement of the injection and stretch-blow cores 13, 23 allows the mating of the injection and stretch-blow neck rings 12, 22 with the injection and stretch-blow cores 13, 23 while separated from the injection and stretch-blow cavities 11, 21.

Said at least one molding unit can be one or more rows of molding units, for example up to six, eight or ten parallel rows of molding units. All those molding units of the mold can be actuated by shared actuators, for example, the opening and closing of the injection stacks 10 and of the stretch-blow stacks 20 of all the molding units can be actuated by shared actuators.

Typically, the movement of all the injection cores 13 and of all the stretch-blow cores 23 in the direction parallel to the first and second axial directions 1A and 1B can be actuated by a single shared actuator and/or their lateral movement in a plane perpendicular to the first and second axial directions 1A and 1B can be also actuated by a single shared actuator.

Equally, the movement of all the injection neck rings 12 and of all the stretch-blow neck rings 22 in the direction parallel to the first and second axial directions 1A and 1B can be actuated by a single shared actuator. Other movements, such the movement of all the injection neck rings, or of all the stretch-blow neck rings, from the closed neck position to the open neck position can be also actuated by a single shared actuator.

For example, all the molding units may share the same core support 30, and therefore will be moved simultaneously in the first and second axial directions by a single shared actuator connected to said core support 30.

Also, all the molding units of the same row may share the same transfer support 33, producing a simultaneous movement of all the injection cores 13 and all the stretch-blow cores 23 of the same row by a single shared actuator connected to said transfer support 33.

All the molding units may also share the same neck ring support 32, producing the simultaneous movement of all the injection and stretch-blow neck ring 12, 22 in the direction of the first and second axial directions 1A, 2A actuated by a single shared actuator connected to said neck ring support 32.

Alternatively, the at least one molding unit can be an even number of symmetric rows of molding units, for example four or six or eight symmetric rows, with two, three or four on each symmetric half. The rows of each symmetrical half of rows are preferably driven by shared actuators in the same manner described above, each half being actuated by symmetric actuators. Some of the actuators can be also shared by both symmetric sides, for example the actuators responsible for the opening and closing of the injection stacks 10 and of the stretch-blow stacks 20 of all the molding units.

The symmetry of the mold reduces the inertia produced by the lateral transfer movement of the stretch-blow cores to be supported by the structure of the machine, because the symmetric molding units include symmetric stretch-blow cores which move simultaneously in opposed directions.

Regardless of whether the rows of molding units are symmetrical or not, each row of molding units preferably comprise:
one first row of successive injection stacks 10 and one second row of successive stretch-blow stacks 20, the first and second rows being adjacent to each other; or
one first row of alternating injection stacks 10 and stretch-blow stacks 20 and one second row of alternating injection stacks 10 and stretch-blow stacks 20, the first and second rows being adjacent to each other, and each injection stack 10 of the first row being adjacent to an injection stacks 10 of the second row.

According to the first example, the first row can include several injection stacks 10, for example up to six, eight or ten successive injection stacks 10, and the second row will include the same number of stretch-blow stacks 20 as the number of injection stacks 10 included in the first row.

According to the second example, each row alternate injection stacks 10 and stretch-blow stacks 20, for example up to six, eight, ten or twelve successive stacks alternating up to three, four, five or six injection stacks 10 with up to three, four, five or six stretch-blow stacks 20.

According to a second aspect of the present invention, directed to an injection stretch blow molding method for an injection stretch blow molding mold comprising at least one molding unit.

The proposed method comprises, for each molding unit, forming a preform 1 by injecting molten material into one injection stack 10 constituted by an injection cavity 11, an injection neck ring 12 and an injection core 13 coupled in a closed position.

Then, the method comprises extracting the preform 1 from the injection stack 10 by separating the injection cavity 11, the injection neck ring 12 and the injection core 13 in a first axial direction 1A to an open position, while keeping the preform 1 holding by the injection neck ring 12, and transferring the preform 1 from the injection stack 10 to a stretch-blow stack 20, inserting the preform 1 in the stretch-blow stack 20.

Once the preform 1 is housed in the stretch-blow stack, the method comprises forming a container 2 by stretch-blowing the preform 1 housed in the stretch-blow stack 20 by moving a stretch rod 24 from a retracted position to an extended position into the stretch-blow stack 20 and by blowing pressurized gas into the preform 1, the forming of the container 2 being simultaneous with the forming of another preform 1 in the injection stack 10.

Finally, the method comprises extracting the container 2 from the stretch-blow stack 20 by separating a stretch-blow cavity 21, a stretch-blow neck ring 22 and a stretch-blow core 23, constitutive of the stretch-blow stack 20 when coupled in a closed position, in a second axial direction 2A parallel to the first axial direction 1A from the closed position to an open position while keeping the container 2 hold by the stretch-blow neck ring 22, simultaneously with the extraction of the simultaneously formed preform 1 from the injection stack 10 and releasing the container 2.

The transferring of the preform 1 comprises moving the stretch-blow core 23 to a first transfer position aligned with the first axial direction 1A, attaching the preform 1 to the stretch-blow core 23 while maintaining the container 2 simultaneously formed hold by the stretch-blow neck ring 22, releasing the preform 1 from the injection neck ring 12 moving the stretch-blow core 23 to a second transfer position aligned with the second axial direction 2A and, after releasing the simultaneously formed container 2 from the stretch-blow neck ring 22, closing the stretch-blow stack 20 housing the preform 1 therein.

According to one embodiment of the proposed method, the attaching of the preform to the stretch-blow core 23 may comprise mating the injection neck ring 12 and the stretch-blow core 23 by a relative movement in the first axial direction 1A producing at least a partial insertion of stretch-blow core 23 in the preform 1 hold by the injection neck ring 12.

The closing of the stretch-blow stack 20 can comprise moving the two parts constitutive of the stretch-blow neck ring 22 from an open neck ring position in which the parts are separated to each other, to a closed neck ring position in which the parts are coupled around the preform 1 hold by the stretch-blow core 23, and mating the stretch-blow neck ring 22 and the stretch-blow core 23 with the stretch-blow cavity 21.

Optionally, before moving the stretch-blow neck ring 22 to the closed neck ring position, the method can further comprise inserting at least partially the stretch-blow core 23, with the preform 1 hold thereon, in the stretch-blow neck ring 22 while the stretch-blow neck ring 22 remains in the open neck ring position by a relative movement in the second axial direction 2A.

The movement of the stretch-blow core 23 to the first transfer position can be preferably a linear movement in a plane perpendicular to the first axial direction 1A, or a sliding movement in a transversal direction perpendicular to both first and second axial directions 1A, 2A.

The movement of the stretch-blow core 23 to the first transfer position can be simultaneous with a movement of the injection core 13 from a position aligned with the first axial direction 1A to an unactive position not aligned with the first axial direction 1A, freeing space for the stretch-blow core 23.

The movement of the stretch-blow core 23 to the first transfer position aligned with the first axial direction 1A may start before the finish of the extraction movement of the injection neck ring 12 in the first axial direction 1A, i.e. before the preform is completely extracted from the injection cavity 11, and of the extraction movement of the stretch-blow neck ring 22 in the second axial direction 2A, i.e. before the container is completely extracted from the stretch-blow cavity 21.

According to an embodiment, the at least partial insertion of the preform 1 in the stretch-blow neck ring 22 in the open neck ring position releases the container from the stretch-blow neck ring 22 while it is in the open neck ring position.

Said at least one molding unit can be one or more rows of molding units simultaneously actuated, or an even number of symmetric rows of molding units simultaneously actuated, to move all the injection stacks 10 and all the stretch-blow stacks 20 between the open and close positions at the same time, and to simultaneously produce the preforms 1 and the containers 2.

## Claims

1. An injection stretch blow molding mold comprising at least one molding unit comprising:
one injection stack (10) constituted by an injection cavity (11), an injection neck ring (12) and an injection core (13) coupled in a closed position and separable to an open position in a first axial direction (1A), the injection cavity (11) being connected to a molten material supply (15) for producing a preform (1);
a transfer device adapted for transferring the preform (1) from the injection stack (10) to the stretch-blow stack (20), inserting the preform (1) in the stretch-blow stack (20);
one stretch-blow stack (20) constituted by a stretch-blow cavity (21), a stretch-blow neck ring (22) and a stretch-blow core (23) coupled in a closed position and separable to an open position in a second axial direction (2A) parallel to the first axial direction (1A), the stretch-blow core (23) being connected to a pressurized gas supply (25), for blowing the preform (1) hold in the stretch-blow stack (20) into a container (2),
**characterized in that**
the injection neck ring (12) is part of the transfer device, and the stretch-blow core (23) is part of the transfer device and is movable from the open position to a first transfer position in which the stretch-blow core (23) is aligned in the first axial direction (1A) with the injection neck ring (12).

2. The mold according to claim 1 wherein the stretch-blow core (23) includes a stretch rod (24) movable from a retracted position to an extended position into the stretch-blow stack (20) for stretching the preform (1) to the heigth of the container during the stretch-blowing stage.

3. The mold according to claim 1 or 2 wherein each of the injection neck ring (12) and stretch-blow neck ring (22) is split into two halves coupled in a closed neck ring position and separable to an open neck ring position.

4. The mold according to claim 1, 2 or 3 wherein the injection core (13) and the stretch-blow core (23) are both supported in a single transfer support (33) movable in a plane perpendicular to the first and second axis directions (1A, 2A), said transfer support (33) being supported in a single core support (30) movable in a direction parallel to the first and second axial directions (1A, 2A).

5. The mold according to any preceding claim wherein the stretch-blow core (23), including the stretch rod (24) in retracted position, has similar length in a direction parallel to the first and second axial directions (1A, 1B) as the injection core (13), so that the stretch-blow core (23) and/or the stretch rod (24) are in contact or in close proximity with the bottom of the preform (1) when the preform (1) is supported on the stretch-blow core (23).

6. The mold according to any preceding claim wherein the injection neck ring (12) and the stretch-blow neck ring (22) are both supported in a single neck ring support (32) movable in a direction parallel to the first and second axial directions (1A, 2A) with independence to the movement of other parts of the injection stack (10) and of the stretch-blow stack (20).

7. The mold according to any preceding claim wherein the at least one molding unit are one or more rows of molding units actuated by shared actuators, or an even number of symmetric rows of molding units, the rows of each symmetrical half of rows being driven by shared actuators, each row of molding units comprising:
one first row of successive injection stacks (10) and one second row of successive stretch-blow stacks (20), the first and second rows being adjacent to each other; or
one first row of alternating injection stacks (10) and stretch-blow stacks (20) and one second row of alternating stretch-blow stacks (20) and injection stacks (10), the first and second rows being adjacent to each other, and each injection stack (10) of the first row being adjacent to an injection stack (10) of the second row.

8. The mold according to claim 7 wherein
all the molding units share the same core support (30) actuated by the same shared actuator; and/or
all the molding units share the same neck ring support (32) actuated by the same shared actuator; and/or
all the molding units of the same row share the same transfer support (33) actuated by the same shared actuator; and/or
all the adjacent rows of molding units share the same transfer support ( 33 ) actuated by the same shared actuator.

9. The mold according to claims 7 or 8 wherein the injection stacks are placed axially backward with respect to the level of the stretch-blow stacks.

10. An injection stretch blow molding method for an injection stretch blow molding mold comprising at least one molding unit, the method comprising, for each molding unit:
forming a preform (1) by injecting molten material into one injection stack (10) constituted by an injection cavity (11), an injection neck ring (12) and an injection core (13) coupled in a closed position;
extracting the preform (1) from the injection stack (10) by separating the injection cavity (11), the injection neck ring (12) and the injection core (13) in a first axial direction (1A) to an open position, while keeping the preform (1) holding by the injection neck ring (12);
transferring the preform (1) from the injection stack (10) to a stretch-blow stack (20), inserting the preform (1) in the stretch-blow stack (20);
forming a container (2) by stretch-blowing the preform (1) housed in the stretch-blow stack (20) by blowing pressurized gas into the preform (1), the forming of the container (2) being simultaneous with the forming of another preform (1) in the injection stack (10); and
extracting the container (2) from the stretch-blow stack (20) by separating a stretch-blow cavity (21), a stretch-blow neck ring (22) and a stretch-blow core (23), constitutive of the stretch-blow stack (20) when coupled in a closed position, in a second axial direction (2A) parallel to the first axial direction (1A) from the closed position to an open position while keeping the container (2) hold by the stretch-blow neck ring (22), simultaneously with the extraction of the simultaneously formed preform (1) from the injection stack (10) and releasing the container (2);
**characterized in that**
the transferring of the preform (1) comprises moving the stretch-blow core (23) to a first transfer position aligned with the first axial direction (1A), attaching the preform (1) to the stretch-blow core (23), releasing the preform (1) from the injection neck ring (12), moving the stretch-blow core (23) to a second transfer position aligned with the second axial direction (2A) and, after releasing the simultaneously formed container (2) from the stretch-blow neck ring (22), closing the stretch-blow stack (20) housing the preform (1) therein.

11. The method according to claim 10 which includes moving a stretch rod (24) installed in the stretch-blow core, from a retracted position to an extended position into the stretch-blow stack (20) for stretching the preform (1) to the heigth of the container during the stretch-blowing stage.

12. The method according to claim 10 or 11 wherein the attaching of the preform to the stretch-blow core (23) comprises mating the injection neck ring (12) and the stretch-blow core (23) by a relative movement in the first axial direction (1A) producing at least a partial insertion of stretch-blow core (23) in the preform (1) hold by the injection neck ring (12).

13. The method according to claim 10, 11 or 12 wherein the closing of the stretch-blow stack (20) comprises moving the two halves constitutive of the stretch-blow neck ring (22) from an open neck ring position in which the two halves are separated to each other, to a closed neck ring position in which the two halves are coupled around the preform (1) hold by the stretch-blow core (23), and mating the stretch-blow neck ring (22) and the stretch-blow core (23) with the stretch-blow cavity (21).

14. The method according to any preceding claim 10 to 13 wherein the movement of the stretch-blow core (23) to the first transfer position is a linear movement in a plane perpendicular to the first axial direction (1A), or a sliding movement in a transversal direction perpendicular to both first and second axial directions (1A, 2A).

15. The method according to any preceding claim 10 to 14 wherein the movement of the stretch-blow core (23) to the first transfer position is simultaneous with a movement of the injection core (13) from a position aligned with the first axial direction (1A) to an unactive position not aligned with the first axial direction (1A), freeing space for the stretch-blow core (23).

16. The method according to any preceding claim 10 to 15 wherein the at least one molding unit is one or more rows of molding units, or an even number of symmetric rows of molding units, all the molding units being simultaneously actuated to move all the injection stacks (10) and all the stretch-blow stacks (20) between the open and close positions and to simultaneously produce the preforms (1) and the containers (2).

17. The method according to any preceding claim 10 to 16 wherein the movement of the stretch-blow core (23) to the first transfer position aligned with the first axial direction (1A) starts before the finish of the extraction movement of the injection neck ring (12) in the first axial direction (1A) and of the extraction movement of the stretch-blow neck ring (22) in the second axial direction (2A).
